# EUROPÄISCHE PATENTSCHRIFT

(11) **EP 0 740 153 B1**
(45) Veröffentlichungstag und Bekanntmachung des Hinweises auf die Patenterteilung: **16.04.1997**
(21) Anmeldenummer: 95106454.2
(22) Anmeldetag: 28.04.1995
(51) Int. Cl.: G01N 29/04, G01N 29/10

(54) **Verfahren zur Aufbereitung und Wiedergabe gespeicherter Kurzzeitschallmuster**
Method for processing and reproducing stored patterns of short time sounds
Méthode pour le traitement et la reproduction de signaux de son de courte durée stockés

(43) Veröffentlichungstag der Anmeldung: 30.10.1996
(73) Patentinhaber: Institut für Sicherheitstechnologie (ISTec) GmbH, 85748 Garching (DE)
(72) Erfinder: Olma, Bernd, Dr., D-81927 München (DE); Schütz, Bernd, D-85748 Garching (DE); Ding, Yongjian, D-80538 München (DE)
(74) Vertreter: Hoffmann, Eckart, Dipl.-Ing.

(56) Entgegenhaltungen:
- EP-A- 0 600 093
- WO-A-92/12440

## Beschreibung

Die Erfindung betrifft ein Verfahren zur Aufbereitung und Wiedergabe digital gespeicherter Kurzzeitschallmuster.

Das der Erfindung zugrundeliegende Problem wird nachfolgend anhand eines Körperschallüberwachungssystems (KÜS) für kerntechnische Anlagen erläutert, wie es in verschiedenen Varianten bekannt und im Einsatz ist. Ein solches KÜS dient der akustischen Überwachung des Reaktorprimärkreises zum Zwecke des Erkennens und Beurteilens außergewöhnlicher Betriebszustände, die mit Schallereignissen verbunden sind, welche als Körperschall wahrnehmbar sind. Obwohl für den bestimmungsgemäßen Betrieb die Einbauten in der druckführenden Umschließung des Kühlmittels den auftretenden Beanspruchungen standhalten müssen, haben Erfahrungen gezeigt, daß sich Teile wegen der hohen Kühlmittelströmung infolge von unkontrollierbaren Wirbelablösungen oder Vibrationsanregungen lockern oder gar lösen können. Beim Auftreffen abgelöster oder beim Anschlagen lockerer Teile an die innere Oberfläche der druckführenden Umschließung des Reaktorkühlmittels und deren Einbauten findet eine Energieübertragung auf die Wandung statt. Hierdurch werden Einzelschallereignisse erzeugt. Außerdem werden durch die Kühlmittelströmung und Pumpen sowie durch andere in oder an der druckführenden Umschließung angebrachte und während des Betriebes betätigte Komponenten (z.B. Ventilbetätigung und Steuerstabantrieb) Hintergrundgeräusche erzeugt. Diese setzen sich zusammen aus monotonen Grundgeräuschen und betriebsbedingten Einzelschallereignissen.

Der Körperschall wird durch Körperschallaufnehmer erfaßt, die außen an der druckführenden Umschließung des Reaktorkühlmittels angebracht sind. Als Aufnehmer werden temperatur- und strahlungsresistente Beschleunigungsaufnehmer auf Piezobasis verwendet, die im akustischen Frequenzbereich arbeiten. Die durch Anschlag loser oder lockerer Teile an die umgebenden Wände oder Einbauten eingeleitete Energie hat zunächst die Form eines sehr kurzen, scharf einsetzenden Impulses, der auf seinem Weg zerfließt und sich in den Signalen der Körperschalllaufnehmer daher mit jeweils unterschiedlichen Signalformen als sogenannter Burst abbildet. Eine geeignete Auswertung der von solchen Körperschallaufnehmern gelieferten Burstsignale ermöglicht es, Einzelschallereignisse, die von abgelösten oder lockeren Teilen herrühren, zu erkennen und von den Hintergrundgeräuschen zu unterscheiden.

Die Überwachung und Auswertung der von in der Regel mehreren Körperschallaufnehmern erfaßten Schallsignale umfaßt eine objektive und eine subjektive Beurteilung. Zur subjektiven Beurteilung werden die Schallsignale der Aufnehmer abgehört. Da das menschliche Ohr äußerst selektiv zu hören vermag und Veränderungen im Klangbild schnell festgestellt werden können, ist die subjektive Beurteilung bei der akustischen Überwachung von wesentlicher Bedeutung.

Die von den Körperschallaufnehmern gelieferten Signale werden zunächst verstärkt und zum Hervorheben der Burstanteile gegenüber dem Hintergrundgeräusch geeignet gefiltert. Die so aufbereiteten Signale durchlaufen einen Grenzwertmelder, der bei Überschreiten eines festen und/oder gleitenden Schwellenwerts ein Meldungssignal abgibt. Burstsignale, die zu einer Meldung führen, werden bei neueren Systemen mit einer Abtastrate von typisch 100 kHz mittels eines sogenannten Transientenrecorders digitalisiert und auf einer Festplatte als ein Kurzzeitschallmuster gespeichert, das sich aus einem sogenannten Pretriggerabschnitt und einem Ereignisabschnitt zusammensetzt. Der Pretriggerabschnitt stellt das Signal vor Auftreten des meldungsauslösenden Burstsignals dar, während der Ereignisabschnitt den Zeitverlauf des Burstsignals repräsentiert. Die Kurzzeitschallmuster haben eine Dauer von 40 bis 100 ms (entsprechend 4.000 bis 10.000 Abtastwerten). Die gespeicherten Kurzzeitschallmuster können dann - bei den neueren Systemen mittels eines PC - durch Vergleich mit Referenzdaten und nach statistischen Methoden beurteilt werden.

Die digitale Speicherung der Kurzzeitschallmuster mit einer Dauer von 40 bis 100 ms stellt einen Kompromiß dar, zwischen den Anforderungen an eine kontinuierlich in Echtzeit arbeitende Signalüberwachung- und erfassung, vorgegebenen physikalischen Zeitdauern von akustischen Burstsignalen und praktischen Begrenzungen der Speicherkapazität des Erfassungssystems. Eine akustische Wiedergabe dieser Kurzzeitschallmuster zum Zwecke der subjektiven Beurteilung ist wenig sinnvoll, da sie mit ihrer geringen Dauer aus Gründen der Wahrnehmungsfähigkeit des menschlichen Gehörs für eine akustische Beurteilung ungeeignet sind. Aus der Druckschrift "Der Maschinenschaden" 55(1982) Seiten 122-128 ist es bekannt, nach Auslösen einer Meldung ein Magnetbandgerät zu starten, das alle nachfolgenden Signale für eine Dauer von etwa 60s als Langzeitschallmuster aufzeichnet. Da hier in gleicher Weise wie im Transientenrecorder die Signale aller Körperschallaufnehmer parallel registriert werden müssen, ist ein Mehrkanalbandgerät erforderlich, was einen zusätzlichen technischen und finanziellen Aufwand erfordert. Im übrigen ist aufgrund der seriellen Aufzeichnung aufeinanderfolgender Schallereignisse das gezielte Abhören eines bestimmten Ereignisses zeitaufwendig.

Aufgabe der Erfindung ist es, ein Verfahren zur Aufbereitung und Wiedergabe digital gespeicherter Kurzzeitschallmuster der Art, wie sie bei den beschriebenen Körperschallüberwachungssystemen anfallen, zu schaffen, das eine subjektive akustische Bewertung der erfaßten Schallereignisse auf der Basis dieser Kurzzeitschallmuster ermöglicht.

Diese Aufgabe wird erfindungsgemäß durch ein Verfahren gemäß Patentanspruch 1 gelöst.

Vorteilhafte Weiterbildungen der Erfindung sind in den Unteransprüchen gekennzeichnet.

Die Natur der Kurzzeitschallmuster, auf die das erfindungsgemäße Verfahren angewendet wird, wurde voranstehend anhand eines Körprschallüberwachungssystems für kerntechnische Anlagen erläutert. Es ist zu betonen, daß die vorliegende Erfindung über diesen speziellen Anwendungsbereich hinaus überall dort eingesetzt werden kann, wo bei akustischen Überwachungssystemen vergleichbare digital gespeicherte Kurzzeitschallmuster vorhanden sind und eine subjektive Beurteilung der erfaßten Schallereignisse durch das menschliche Gehör erwünscht ist.

Im Rahmen der vorliegenden Beschreibung wird unter einem Kurzzeitschallmuster ein insbesondere in digitaler Form vorliegendes elektrisches Signal verstanden, das ein Schallereignis repräsentiert und aufgrund seiner kurzen Zeitdauer für eine Beurteilung durch das menschliche Gehör nach elektro-akustischer Umwandlung ungeeignet ist. Unter einem Langzeitschallmuster wird ein entsprechendes Signal verstanden, dessen Länge für eine Beurteilung durch das menschliche Gehör ausreicht, beispielsweise eine Dauer von einer Sekunde oder mehr besitzt.

Die Erfindung beruht auf der Erkenntnis, daß ein Kurzzeitschallmuster, sofern es - was bei bekannten Körperschallüberwachungssystemen der Fall ist und für andere Anwendungen hier vorausgesetzt wird - vor dem eigentlichen Ereignisabschnitt einen Pretriggerabschnitt aufweist, alle Informationen enthält, die erforderlich sind, um ein Langzeitschallmuster zu rekonstruieren, das dem ursprünglichen Schallsignal entsprechender Länge gleich oder zumindest sehr ähnlich ist. Für die Wahrnehmung und Beurteilbarkeit durch das menschliche Gehör kommt es nicht auf die Länge des Burstsignals an, dessen Länge auch im ursprünglichen Schallsignal nicht größer als im abgespeicherten Kurzzeitschallmuster ist. Vielmehr beruht die Urteilsfähigkeit des Gehörs auf dem Unterschied zwischen dem "Normalzustand", d.h. dem Hintergrundgeräusch, und dem Burstsignal. Wenn sich das Ohr an den "Normalzustand" gewöhnt hat reagiert es äußerst empfindlich selbst auf impulsartige Änderungen. Die Erfindung macht sich diese Tatsache zunutze, indem sie im Langzeitschallmuster das eigentliche Burstsignal in ein den Normalzustand darstellendes Hintergrundgeräusch einer für das Gehör ausreichenden Länge einbettet. Das dafür erforderliche Hintergrundgeräusch wird durch Vervielfachung des Pretriggerabschnitts des Kurzzeitschallmusters gewonnen.

Auf diese Weise läßt sich ein einzelnes Kurzzeitschallmuster in ein Langzeitschallmuster verwandeln. Es können aber auch mehrere von nacheinander abgespeicherten Kurzzeitschallmustern abgeleitete Langzeitschallmuster aneinandergefügt werden. Dabei können die synthetisierten Hintergrundgeräuschabschnitte zwischen zwei aufeinanderfolgenden Burstsignalen gerade die der Echtzeit zwischen den Burstsignalen entsprechende Dauer erhalten. Dies setzt natürlich voraus, daß zu jedem Kurzzeitschallmuster der entsprechende Aufnahmezeitpunkt ebenfalls gespeichert wird, was bei bekannten Körperschallsystemen der Fall ist.

Wenn die Kurzzeitschallmuster in einer für PC's kompatiblen Form gespeichert sind, läßt sich das erfindungsgemäße Verfahren problemlos als Software für einen PC implementieren. Moderne Multimedia PCs erlauben sogar die akustische Wiedergabe der erhaltenen Langzeitschallmuster über Kopfhörer oder Lautsprecher. Da solche PCs auch für die objektive Signalüberwachung und -auswertung akustischer Überwachungssysteme bestens geeignet sind, kann das erfindungsgemäße Verfahren ohne zusätzliche Hardware ausgeführt werden und ist damit der analogen Speicherung von Langzeitschallmustern in verschiedenster Hinsicht weit überlegen.

Die Länge des Pretriggerabschnitts kann mit etwa 20 bis 30 % der Gesamtlänge des Kurzzeitschallmusters angenommen werden. Bei ihr handelt es sich um eine bekannte, von der speziellen Art des Transientenrecorders abhängige Konstante. Die praktische Realisierung des Verfahrens der Erfindung setzt die Kenntnis dieser Konstanten voraus; für das Prinzip der Erfindung ist der genaue Wert dieser Konstanten allerdings ohne Bedeutung. Die Gesamtlänge des Kurzzeitschallmusters wird so bemessen sein, daß mit einer gewissen Sicherheitsreserve das eigentliche Burstsignal voll enthalten ist. Da die Länge des Burstsignals nicht im voraus bekannt ist, wird der gesamte sich an den Pretriggerabschnitt anschließende Rest des Kuzzeitschallmusters, d.h. der Ereignisabschnitt, als Burstsignal behandelt, selbst wenn das eigentliche Burstsignal nicht den gesamten Rest ausmachen sollte. Der Begriff "Ereignisabschnitt" so, wie er in dieser Beschreibung verwendet wird, kann also einen auf das eigentliche Burstsignal folgenden weiteren Abschnitt umfassen, der im wesentlichen wieder das Hintergrundgeräusch repräsentiert.

Das erfindungsgemäße Verfahren teilt zunächst das Kurzzeitschallmuster in Pretriggerabschnitt und Ereignisabschnitt auf. Der Ereignisabschnitt wird dann zwischen einen Vorlauf und einen Nachlauf geeigneter Länge eingebettet, die je aus dem vervielfachten Pretriggerabschnitt bestehen. Das Zusammensetzen des Pretriggerabschnitts zu diesem Vorlauf und Nachlauf kann zu Störfrequenzkomponenten (Aliaskomponenten) im so gebildeten Langzeitschallmuster führen, die je nach Natur des Burstsignals in dessen Frequenzbereich liegen und deshalb nicht durch nachfolgende Filterung beseitigt werden können. Es ist zwar vorstellbar, eine Filterung auf den Vorlauf und den Nachlauf zu beschränken. Auch eine solche im Rahmen der Erfindung liegende Möglichkeit ist aber zumindest aufwendiger als die nachfolgend beschriebene Weiterbildung der Erfindung.

Zur Vermeidung solcher Aliaskomponenten sieht diese vorteilhafte Weiterbildung der Erfindung vor, daß verschiedene Ausschnitte (Blöcke) des Pretriggerabschnitts zu Vorlauf bzw. Nachlauf verkettet werden. Besonders günstig ist es dabei, wenn die verschiedenen Ausschnitte durch ein Zufallsverfahren ausgewählt werden (randomisiert) werden.

Gemäß einer anderen Weiterbildung erfolgt die Verkettung der einzelnen Ausschnitte des Pretriggerabschnitts in einer solchen Weise, daß jeder Ausschnitt an einem Signalnulldurchgang beginnt und endet und die Verkettung phasenrichtig erfolgt. Wenn also am Ende eines vorangehenden Ausschnitts vor dem Nulldurchgang positive Abtastwerte liegen, so wird der nachfolgende Ausschnitt so ausgewählt, daß dem Nulldurchgang seines Anfangs negative Abtastwerte folgen und umgekehrt. Die Verkettung von dem Vorlauf und dem Ereignisabschnitt sowie zwischen dem letzterem und dem Nachlauf kann auf entsprechende Weise erfolgen.

Mit diesen Weiterbildungen kann eine sehr naturgetreue Nachbildung des im wesentlichen stochastischen Hintergrundsignals ohne Schaffung von Aliaskomponenten erzielt werden.

Abhängig von dem Frequenzspektrum des Burstsignals im Kurzzeitschallmuster kann eine weitere wesentliche Verbesserung des erfindungsgemäßen Verfahrens dadurch erreicht werden, daß eine Frequenztransformation in einen Frequenzbereich vorgenommen wird, in welchem das menschliche Gehör ein Empfindlichkeitsmaximum ausweist. Hierzu wird zunächst die dominierende Frequenzkomponente des Burstsignals ermittelt und dann das Langzeitschallmuster so frequenztransformiert, daß im transformierten Langzeitschallmuster die dominierende Frequenzkomponente des Burstsignals im Bereich maximaler Hörempfindlichkeit liegt.

Ein Ausführungsbeispiel der Erfindung wird nachfolgend anhand der Zeichnungen näher erläutert, in denen:
- Fig. 1(a) und (b): ein Flußdiagramm eines Ausführungsbeispiels des Verfahrens zur Erzeugung eines Langzeitschallmusters ist,
- Fig. 2: das Kurzeitschallmusters als eine Folge von Abtastwerten und seine Umwandlung in ein Langzeitschallmuster illustriert, und
- Fig. 3: den Vorgang der Blockbegrenzung verdeutlicht.

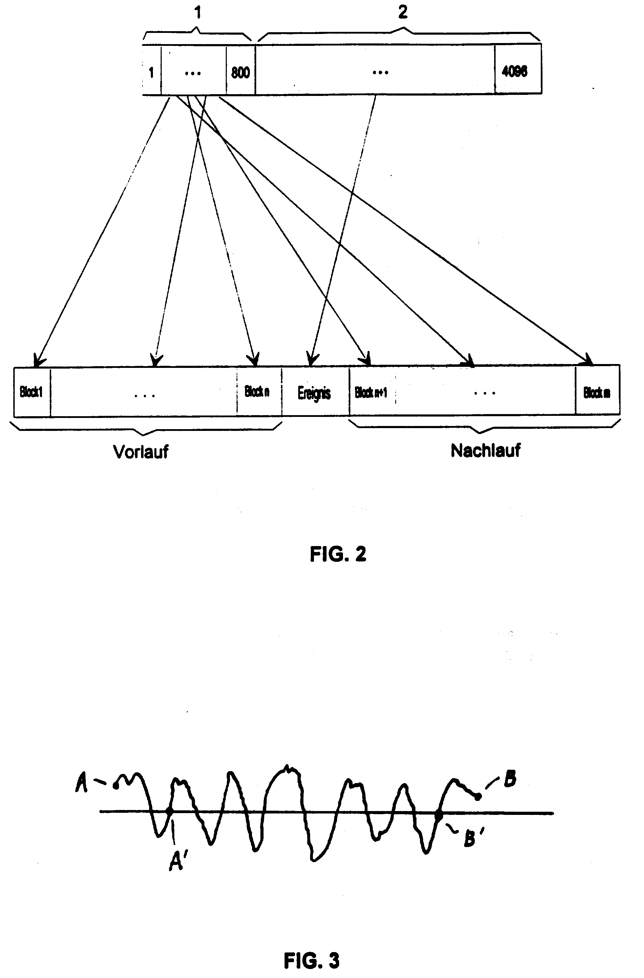

Fig. 2 zeigt schematisch ein Beispiel eines Kurzzeitschallmusters (KSM) in Form einer Folge von Abtastwerten und deren Überführung in ein Langzeitschallmuster (LSM). Dieses Beispiel geht von einem KSM einer Länge von 40 ms mit 4096 Abtastwerten aus. Der Pretriggerabschnitt 1 ist mit 800 Abtastwerten zu etwa 20% des gesamten KSM angenommen. Das LSM hat eine Länge von ca. 2 s entsprechend 200.000 Abtastwerten. Da die Länge des Ereignisabschnitts 2 bei diesem Beispiel 3.296 Abtastwerte beträgt, müssen Vorlauf und Nachlauf zusammen etwa 200.000 - 3.296 = 196.704 Abtastwerte aufweisen. Verarbeitungstechnisch ist es am einfachsten Vorlauf und Nachlauf gleich lang zu machen, obwohl diese keine unbedingte Voraussetzung ist. Aus den 800 Abtastwerten sind demnach Vorlauf und Nachlauf mit je ca. 98.352 Abtastwerten zusammenzusetzen.

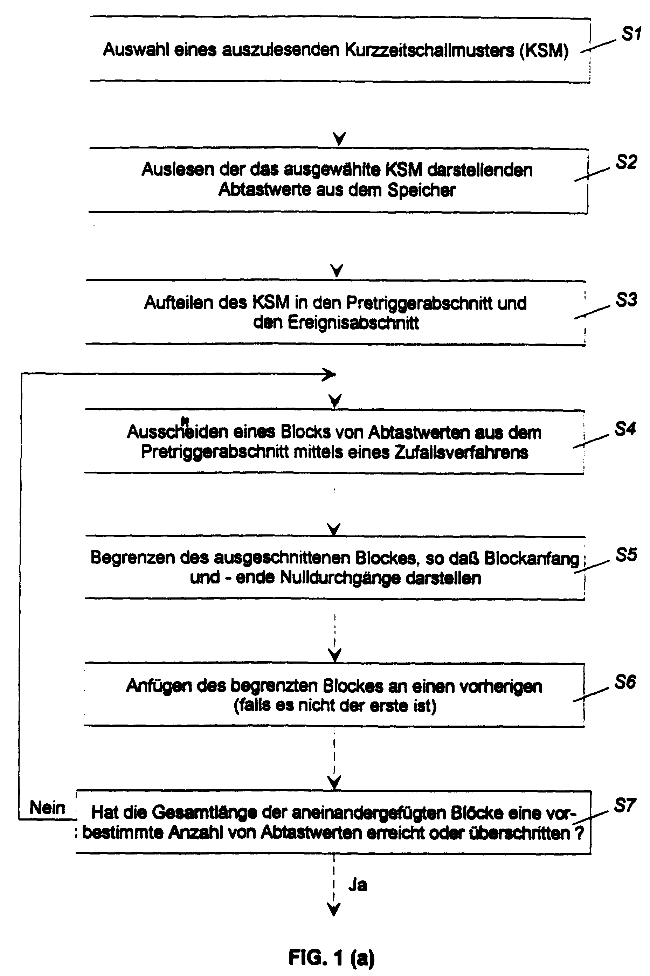

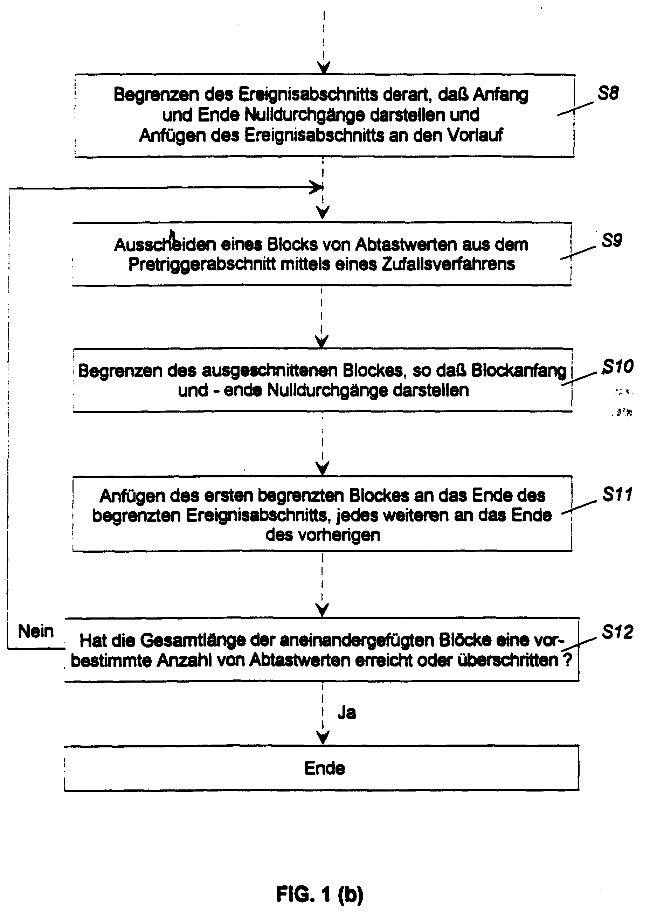

Gemäß dem Flußdiagramm von Fig. 1(a) muß zunächst das in ein LSM umzuwandelnde KSM aus typischerweise einer Vielzahl gespeicherter KSMs ausgewählt werden (Schritt S1). Die Kriterien für diese Auswahl sind nicht Gegenstand der Erfindung und sollen daher nicht weiter beschrieben werden. Für das Verständnis der vorliegenden Erfindung mag ausreichen, daß die einzelnen im Laufe einer gewissen Zeit registrierten und gespeicherten KSMs numeriert sind und mittels ihrer Nummer aus dem Speicher abgerufen werden können. Bekannte KÜS-Systeme erlauben die Auswahl speziell interessierender KSMs beispielsweise anhand von deren graphischer Darstellung.

Nach Auswahl eines zur akustischen Wiedergabe aufzubereitenden KSMs werden die zugehörigen Abtastwerte aus dem Speicher ausgelesen (Schritt S2). Für die vorliegende Erfindung spielt es keine Rolle, ob die Abtastwerte zu einem ausgewählten KSM alle auf einmal in einen Zwischenspeicher ausgelesen werden oder einzeln je nach Bedarf. Für die nachfolgende Beschreibung wird davon ausgegangen, daß die 4096 Abtastwerte des KSM so zur Verfügung stehen, daß einzeln auf sie zugegriffen werden kann.

Schritt S3 legt die Grenze zwischen solchen (1 bis 800), dem Pretriggerabschnitt 1 zuzurechnenden Abtastwerten und solchen (801 bis 4096), die den Ereignisabschnitt 2 darstellen fest. Dies erfolgt aufgrund des oben angegebenen Längenverhältnisses zwischen den beiden Abschnitten.

Schritt S4 schneidet dann aus den ersten 800 Abtastwerten, d.h. dem Pretriggerabschnitt 1, einen ersten Block (Block 1) heraus. Der Block wird (wie die nachfolgenden auch) mittels eines Zufallsgenerators ausgewählt. Eine Möglichkeit besteht darin, mittels des Zufallsgenerators eine erste Zahl innerhalb des ersten Drittels des Pretriggerabschnitts, hier also zwischen 1 und 266, zu bestimmen und den dieser Zahl entsprechenden Abtastwert als den ersten des jeweiligen Blockes zu nehmen. Eine zweite Zufallszahl innerhalb des letzten Drittels, hier also zwischen 533 und 800, legt den letzten Abtastwert des Blockes fest. Eine andere Möglichkeit wählt den Blockanfang innerhalb der ersten Hälfte des Pretriggerabschnitts (zwischen 1 und 400) und eine feste Blocklänge entsprechend der halben Länge des Pretriggerabschnitts (400 Abtastwerte). Eine dritte Möglichkeit wählt Blockanfang und Blocklänge per Zufallsgenerator, wobei der Blockanfang innerhalb der ersten Hälfte des Pretriggerabschnitts und die Blocklänge zwischen 1/3 und 1/2 der Länge des Pretriggerabschnitts liegt.

Im Schritt S5 wird der so gewonnene Block sodann an Anfang und Ende auf einen Nulldurchgang, d.h. einen Abtastwert, der Null oder nahe Null ist, begrenzt. Zur Vermeidung von Phasensprüngen an den Blockstößen und von damit verbundenen Aliaskomponenten ist es vorteilhaft, die Blöcke phasenrichtig zusammenzusetzen. Das bedeutet, daß das Ende eines von zwei im Vorlauf oder Nachlauf aufeinanderfolgenden Blöcken den das Blockende bildenden Nulldurchgang von positiven (oder negativen) Abtastwerten her erreicht, während am Blockanfang des nachfolgenden Blockes dem Nulldurchgang negative (oder positive) Abtastwerte folgen. Vorteilhafterweise wird dem bereits bei der Begrenzung der einzelnen Blöcke auf einen Nulldurchgang Rechnung getragen. So kann z.B. der Anfang jedes nach der Zufallsmethode herausgeschnittenen Blockes auf denjenigen nächstgelegenen Nulldurchgang begrenzt werden, nach dem die Abtastwerte positiv werden, während das Ende auf denjenigen nächstgelegenen Nulldurchgang begrenzt wird, vor dem die Abtastwerte negativ sind.

Fig. 3 veranschaulicht diese Blockbegrenzung. Fig. 3 zeigt einen Teil des Pretriggerabschnitts als analoges Signal. Es sei angenommen, daß durch die Zufallsmethode die Grenzen eines beliebigen Blockes den Punkten A und B in Fig. 2 entsprechend festgelegt wurden. Der Blockanfang wird durch die Begrenzung von A nach A' verlegt, also zu dem nächstfolgenden Nulldurchgang, nach dem die Abtastwerte ins Positive ansteigen. Das Blockende wird dagegen von B nach B' zurückverlegt, also dem nächstzurückliegenden Nulldurchgang, nach dem die Abtastwerte ins Positive ansteigen, vor dem sie also negativ sind. Wie man leicht sieht, treten an den Blockstößen (Schritt S6) keine Phasensprünge auf, wenn alle Blöcke in dieser (oder der umgekehrten) Weise begrenzt werden.

Der aus Schritt S5 resultierende Block stellt den ersten Block des Vorlaufes dar, der im Schritt S6 zwischengespeichert wird.

Schritt S7 prüft, ob die Anzahl der im Schritt S6 zwischengespeicherten Abtastwerte des Vorlaufes eine vorbestimmte Anzahl erreicht oder überschritten hat. Beim ersten Block ist dies natürlich nicht der Fall, so daß das Verfahren zurück zum Schritt S4 geht und der nächste Block ausgeschnitten und verarbeitet wird. Im Schritt S6 werden der zweite Block und alle folgenden an den ersten bzw. den vorherigen angehängt, bis bei Block n die Bedingung des Schrittes S7 erfüllt ist.

Da die Blockenden zunächst zufällig sind, bedeutet dieses Verfahren, daß der Vorlauf (gleiches gilt für den Nachlauf) nicht immer aus genau 98.352 Abtastwerten besteht, das LSM also eine in gewissem Rahmen variable Länge aufweisen wird. Wenn Schritt S7 ergibt, daß 98.352 Abtastwerte erreicht sind oder bereits überschritten wurden, ist die Synthetisierung des Vorlaufs abgeschlossen.

Im Schritt S8 wird an diesen Vorlauf dann der Ereignisabschnitt angehängt, nachdem dessen Anfang und Ende in gleicher Weise begrenzt wurden, wie dies für die Blöcke des Vorlaufs beschrieben wurde, so daß auch hier Phasensprünge vermieden werden.

Fig. 1(b) zeigt das Zusammensetzen des Nachlaufs und sein Anhängen an das Ergebnis des Schrittes S8 in Fig. 1(a). Die Schritte S9 bis S12 in Fig. 1(b) entsprechen den Schritten S4 bis S7 von Fig. 1(a) und sollen daher nicht noch einmal beschrieben werden. Es sei angemerkt, daß im Schritt S12 natürlich auch die Länge des Nachlaufs allein geprüft werden kann, da ja die Gesamtlänge von Vorlauf und Ereignisabschnitt jedenfalls ungefähr bekannt ist.

Hat die Gesamtlänge aus Vorlauf, Ereignisabschnitt und Nachlauf in Schritt S12 einen Wert von 200.000 erreicht oder überschritten, dann ist das LSM fertig. Es wird dann vorteilhafterweise in Form einer Sounddatei in einem PC-üblichen Format gespeichert und mittel einer Soundkarte wiedergegeben, was in der Figur nicht mehr dargestellt ist.

Vor Umwandlung in eine Sounddatei kann eine Frequenztransformation erfolgen, die in den Figuren nicht dargestellt ist. Zu diesem Zweck wird beispielweise mittels einer Fouriertransformation des Ereignisabschnittes dessen dominierende Frequenzkomponente, vorzugsweise im Bereich seines Amplitudenmaximums, ermittelt. Dann wird das Verhältnis der dominierenden Frequenzkomponente zu einer Frequenz maximaler Empfindlichkeit des menschlichen Gehörs bestimmt. Das gemäß dem oben beschriebenen Verfahren erhaltene LSM wird anschließend entsprechend diesem Frequenzverhältnis frequenztransformiert, so daß im transformierten LSM die dominierende Frequenzkomponente des Ereignisabschnittes im Bereich maximaler Hörempfindlichkeit liegt. Die für eine solche Frequenztransformation erforderlichen Mittel oder Prozeduren sind dem Fachmann bekannt und sollen hier nicht weiter erläutert werden.

Die voranstehende Beschreibung bezog sich auf die Verarbeitung eines einzelnen KSM. Die Erfindung eignet sich aber auch für eine sogenannte Ensemble-Wiedergabe. Es kommt vor, daß der Transientenrecorder eine Folge von KSMs registriert, die in relativ kurzen Zeitabständen aufeinanderfolgen. Häufig sind diese KSMs einem zusammenhängenden Ereignis zuzuordnen, so daß es für die akustische Auswertung von Bedeutung sein kann, die einzelnen Ereignisabschnitte dieser KSMs in den zeitlichen Abständen ihrer Registrierung wiederzugeben. Das voranstehend erläuterte Verfahren braucht hiefür nur geringfügig abgewandelt zu werden.

Nach Auswahl der für eine Ensemble-Wiedergabe gewünschten KSMs werden diese gemäß Fig. 1(a) und 1(b) verarbeitet, wobei an den Nachlauf (hier eigentlich: "Zwischenlauf") des eines LSMs der Ereignisabschnitt des nächsten KSMs, gefolgt von einem weiteren Nachlauf angehängt wird, bis alle verarbeitet sind. Die Länge des Nachlaufs, welcher in der Ensemble-Wiedergabe das Hintergrundgeräusch zwischen zwei aufeinanderfolgenden Ereignisabschnitten darstellt, wird entsprechend dem tatsächlichen zeitlichen Abstand der Registrierung der aufeinanderfolgenden KSMs festgelegt. Zu jedem KSM ist seine Registrierungszeit (der Zeitpunkt der Triggerung, die die Registrierung auslöste) gespeichert. Mit jedem KSM wird auch diese Zeit ausgelesen. Die Zeitdifferenz zwischen zwei aufeinanderfolgenden KSMs des Ensembles läßt sich also errechnen und zur Bestimmung der Länge des jeweiligen Nachlaufs im Schritt S12 als Grenzwert verwenden. Ist dieser Wert im Schritt S12 für ein KSM erreicht oder gerade überschritten, wird geprüft, ob es sich um das letzte KSM des Ensembles gehandelt hat. Falls nicht, geht die Verarbeitung bei Schritt S8 in Fig. 1(a) für den Ereignisabschnitt des nächsten KSMs weiter, wobei der Ereignisabschnitt natürlich an den Nachlauf des vorigen (den "Zwischenlauf") angehängt wird.

Für die Erzeugung der "Zwischenläufe" bei der Ensemble-Wiedergabe gibt es verschiedene Möglichkeiten, von denen die zweckmäßigste von Fall zu Fall verschieden sein kann. So können alle "Zwischenläufe" aus dem Pretriggerabschnitt des ersten KSMs synthetisiert werden, es kann immer der zu dem nachfolgenden Ereignisabschnitt gehörige Pretriggerabschnitt herangezogen werden, oder man kann beide Pretriggerabschnitte eines jeweiligen Paares aufeinanderfolgender Ereignisabschnitte heranziehen.

Obwohl bei den beschriebenen Ausführungsformen des erfindungsgemäßen Verfahrens Vorlauf und Nachlauf nacheinander erzeugt werden, läßt sich das Verfahren auch ausführen, indem verschiedene der beschriebenen Schritte parallel erfolgen und/oder die Reihenfolge geändert wird. Wesentlich ist, daß ein Vorlauf und ein Nachlauf aus dem Pretriggerabschnitt gebildet werden, um schließlich mit dem Ereignisabschnitt zu einem Langzeitschallmuster verkettet zu werden. Zu welcher relativen Zeit die dafür erforderlichen Schritte ausgeführt werden ist allenfalls für die Effektivität des Verfahrens und den zu seiner Durchführung benötgten Umfang an Hardware, nicht aber für das resultierende Langzeitschallmuster von Bedeutung.

## Patentansprüche

1. Verfahren zur Aufbereitung und Wiedergabe digital gespeicherter Kurzzeitschallmuster mit einem Pretriggerabschnitt (1) und einem Ereignisabschnitt (2), von denen der Pretriggerabschnitt ein Hintergrundgeräusch und der Ereignisabschnitt ein zu analysierendes Schallereignis repräsentieren, umfassend die Schritte
(a) Bilden eines digitalen Vorlaufs und eines digitalen Nachlaufs durch mehrfaches Aneinanderfügen des Pretriggerabschnitts (1) oder von Teilen desselben,
(b) Zusammensetzen des Vorlaufs, des Ereignisabschnitts (2) und des Nachlaufs in dieser Reihenfolge zu einem digitalen Langzeitschallmuster,
(c) Umwandeln des digitalen Langzeitschallmusters in ein analoges Langzeitschallmuster und
(d) Umwandeln des analogen Langzeitschallmusters in ein akustisches Signal.

2. Verfahren nach Anspruch 1, bei dem im Schritt (a) verschieden lange Teile des Pretriggerabschnitts zusammengefügt werden.

3. Verfahren nach Anspruch 1 oder 2, bei dem Anfang und/oder Ende jedes einzelnen der aneinandergefügten Teile innerhalb des Pretriggerabschnitts nach einer Zufallsmethode ausgewählt werden.

4. Verfahren nach einem der Ansprüche 2 oder 3, bei dem die einzelnen Teile so festgelegt werden, daß Anfang und Ende jeweils von einem Nulldurchgang des Pretriggerabschnitts gebildet werden, und die einzelnen Teile phasenrichtig aneinandergesetzt werden.

5. Verfahren nach einem der vorhergehenden Ansprüche, bei dem das digitale oder das analoge Langzeitschallmuster einer Frequenztransformation in den Bereich maximaler Empfindlichkeit des menschlichen Gehörs unterzogen wird.

6. Verfahren nach Anspruch 5, bei dem
(e) das Amplitudenmaximum des Langzeitschallmusters ermittelt wird,
(f) die dominierende Frequenzkomponente des Langzeitschallmusters im Bereich des Amplitudenmaximums bestimmt wird,
(g) das Verhältnis zwischen der dominierenden Frequenzkomponente und einer Frequenz großer Empfindlichkeit des menschlichen Gehörs errechnet wird und
(h) die Frequenzkomponenten des Langzeitschallmusters in dem im Schritt (g) ermittelten Verhältnis umgesetzt werden.

7. Verfahren nach einem der vorhergehenden Ansprüche, bei dem das digitale Langzeitschallmuster in ein zur akustischen Wiedergabe mittels eines Multimedia-PC geeignetes Format umgesetzt wird.

8. Verfahren nach einem der vorhergehenden Ansprüche, dadurch gekennzeichnet, daß es mittels eines handelsüblichen PC ausgeführt wird.

## Claims

1. A method of processing and reproducing digitally stored shortterm sound patterns with a pretrigger portion (1) and an event portion (2) of which the pretrigger portion represents a background noise and the event portion represents a sound event to be analysed, including the following steps:
(a) forming a digital lead and a digital trail by multiply joining the pretrigger portion (1) or parts thereof,
(b) assembling the lead, the event portion (2) and the trail in that sequence to afford a digital long-term sound pattern,
(c) converting the digital long-term sound pattern into an analog long-term sound pattern, and
(d) converting the analog long-term sound pattern into an acoustic signal.

2. A method according to claim 1 wherein in step (a) parts of the pretrigger portion, which are of different lengths, are assembled.

3. A method according to claim 1 or claim 2 wherein the beginning and/or the end of each individual one of the joined parts are selected within the pretrigger portion in accordance with a random method.

4. A method according to one of claims 2 and 3 wherein the individual parts are so established that the beginning and the end are each formed by a respective passage-through-zero of the pretrigger portion and the individual parts are joined together in correct phase relationship.

5. A method according to one of the preceding claims wherein the digital or analog long-term sound pattern is subjected to frequency transformation into the range of maximum sensitivity of the human hearing.

6. A method according to claim 5 wherein
(e) the amplitude maximum of the long-term sound pattern is ascertained,
(f) the dominant frequency component of the long-term sound pattern in the region of the amplitude maximum is determined,
(g) the relationship between the dominant frequency component and a frequency of great sensitivity of the human hearing is calculated, and
(h) the frequency components of the long-term sound pattern are converted in the relationship ascertained in step (g).

7. A method according to one of the preceding claims wherein the digital long-term sound pattern is converted into a format which is suitable for acoustic reproduction by means of a multimedia-PC.

8. A method according to one of the preceding claims characterised in that it is carried into effect by means of a commercially available PC.

## Revendications

1. Procédé de traitement et de reproduction de motifs sonores numériques de courte durée mémorisés comprenant une portion de prédéclenchement (1) et une portion d'événement (2), la portion de prédéclenchement représentant un bruit de fond et la portion d'événement représentant un événement sonore à analyser, comprenant les étapes consistant à :
(a) former une partie antérieure et une partie postérieure en joignant bout-à-bout plusieurs fois la portion de prédéclenchement (1) ou des parties de celle-ci,
(b) assembler la partie antérieure, la portion d'événement (2) et la partie postérieure dans cet ordre en un motif sonore numérique de longue durée,
(c) convertir le motif sonore numérique de longue durée en un motif sonore analogique de longue durée et
(d) convertir le motif sonore analogique de longue durée en un signal acoustique.

2. Procédé selon la revendication 1 dans lequel dans l'étape (a) des parties de longueurs différentes de la portion de prédéclenchement sont jointes bout-à-bout.

3. Procédé selon la revendication 1 ou 2, dans lequel le début et/ou la fin de chacune des parties individuelles jointes bout-à-bout sont choisis selon une méthode aléatoire dans la portion de prédéclenchement.

4. Procédé selon l'une des revendications 2 ou 3 dans lequel les parties individuelles sont fixées de telle façon que le début et la fin soient respectivement formés par un passage par zéro de la portion de prédéclenchement, et que les parties individuelles soient accolées correctement en ce qui concerne la phase.

5. Procédé selon l'une quelconque des revendications précédentes dans lequel le motif sonore numérique ou analogique de longue durée est soumis à une transformation de fréquences dans le domaine de la sensibilité maximum de l'oreille humaine.

6. Procédé selon la revendication 5 dans lequel
(e) l'amplitude maximum du motif sonore de longue durée est relevée
(f) les composantes de fréquences dominantes du motif sonore de longue durée sont déterminées dans la zone du maximum d'amplitude,
(g) le rapport entre les composantes de fréquences dominantes et une fréquence de sensibilité élevée de l'oreille humaine est calculé et
(h) les composantes de fréquences du motif sonore de longue durée sont déplacées selon le rapport déterminé à l'étape (g).

7. Procédé selon l'une quelconque des revendications précédentes dans lequel le motif sonore numérique de longue durée est transformé pour sa reproduction acoustique au moyen d'un PC multimédia de format approprié.

8. Procédé selon l'une quelconque des revendications précédentes, caractérisé en ce qu'il est mis en oeuvre au moyen d'un PC de type courant.
